# EUROPEAN PATENT SPECIFICATION

(11) **EP 2 750 438 B1**
(45) Date of publication and mention of the grant of the patent: **05.07.2017**
(21) Application number: 12827365.3
(22) Date of filing: 08.05.2012
(51) Int. Cl.: H04W 28/16

(54) **METHOD FOR ACCESSING AUGMENTED REALITY USER CONTEXT**
VERFAHREN ZUM ZUGRIFF AUF BENUTZERKONTEXT IN ERWEITERTER REALITÄT
PROCÉDÉ D'ACCÈS À UN CONTEXTE D'UTILISATEUR DE RÉALITÉ AUGMENTÉE

(30) Priority: 27.08.2011 CN 201110249312
(43) Date of publication of application: 02.07.2014
(73) Proprietor: ZTE Corporation, Shenzhen, Guangdong 518057 (CN)
(72) Inventor: HUANG, Cheng, Shenzhen Guangdong 518057 (CN)
(74) Representative: Müller-Boré & Partner Patentanwälte PartG mbB
(86) International application number: PCT/CN2012/075182
(87) International publication number: WO 2013/029388

(56) References cited:
- EP-A1- 2 193 825
- EP-A1- 2 354 978
- EP-A2- 2 360 567
- WO-A2-03/054654
- CN-A- 102 143 429
- CN-A- 102 214 000
- KOSUKE NISHIHARA ET AL: "Power Saving in Mobile Devices Using Context-Aware Resource Control", NETWORKING AND COMPUTING (ICNC), 2010 FIRST INTERNATIONAL CONFERENCE ON, IEEE, PISCATAWAY, NJ, USA, 17 November 2010 (2010-11-17), pages 220-226, XP031855308, ISBN: 978-1-4244-8918-3

## Description

### Technical Field

The solution of the present invention relates to the field of mobile communications, and particularly, to methods for accessing an Augmented Reality (AR) user context.

### Background

With the maturation and development of intelligent terminals and Mobile Internet technologies, the Augmented Reality (AR) technology once confined to laboratories has begun to go into the public view. A large number of Internet/Mobile Internet AR applications that are based on image recognition and terminal positioning technology, which are called Mobile Augmented Reality (Mobile AR) applications, have begun to emerge. This attracted great attention in the industry and has become a technical research hotspot.

The research and application of the Mobile AR technology applies virtual AR information to the real world and changes the way for a user to observe the world around, i.e., from the traditional text input-based web page (WEB) browsing and querying mode into a brand new mode of camera-based shooting, hotspot capturing, and augmented information real-time browsing.

A Mobile AR user using a Mobile AR terminal (e.g., a smart phone) can obtain an AR service experience while shooting the scene around the user. The following service scenario exists: an Augmented Reality Application (AR Application) running on the user's mobile terminal captures, based on the user's current location, an Augmented Reality Target (AR Target) deployed by an AR service provider, such as a hotspot (also referred to as Point Of Interest (POI)) associated with a geographic location, and obtains, according to the user's choice, Augmented Reality Content (AR Content) corresponding to the AR Target, including: text, image, audio, video. In combination with user terminal geographic fingerprint information (e.g., latitude and longitude, orientation, etc.), the AR Application displays on a screen the obtained AR Content together with the live-action information around shot by a terminal camera, thus presenting the user with an Augmented Reality View (AR View), which is an observation view provided by the AR Application and formed by the fused rendering display of the obtained AR Content and the images shot by the camera in real time on the display screen of the terminal. This allows the user to obtain an unusual AR service experience.

In order to accurately discover the AR Target and correctly render the AR Content, in the process of using an AR service, the system needs to collect and access context of an AR terminal, including: terminal geographical location reported by a Global Positioning System (GPS) module, and terminal orientation, angle with respect to the ground, and so on collected by a compass and a gravity accelerometer.

Compared with a traditional personal computer (PC), the sustained computing power of a mobile terminal is still limited. Although existing AR systems and their applications are capable of collecting and using the terminal context, the power consumption of a mobile terminal is relatively large. For example, each positioning of a Global Positioning System (GPS) device on a terminal requires a relatively long time (30 seconds to several minutes) to search for satellite signals and consumes relatively high power, which will be a significant burden to mobile terminals with limited electric quantity. In addition, in order to achieve better Time to First Fixed (TTFF), some GPS devices of terminals will continually download satellite information and be in a turned-on state all the time, which will accordingly increase the power consumption and thus shorten the battery life. Combined with the power consumption for network communication and terminal screen display, the existing solution for accessing AR terminal context cannot provide lasting support for AR Applications.

Thus, in the prior art, the operation of the AR terminal capability accessing the AR user context cannot be dynamically adjusted, which in a certain scenario causes the power consumption of the capability component to be wasted, resulting in shortened battery life of the AR terminal.

KOSUKE NISHIHARA, "Power saving in mobile devices using context-aware resource control", networking and computing (ICNC), 2010 first international conference on, IEEE, PISCATAWAY, NJ, USA, 17 November 2010 and EP 2354978 provide respective technical solutions; however, the above mentioned problem still remains unsolved.

### Summary

The embodiments of the present invention provide methods for accessing an AR user context according to the features of independent claims 1 and 10 to solve at least one of the problems in the prior art that the accessing of an AR context cannot be dynamically managed.

According to an embodiment, a method for accessing an AR user context is provided, including: a Mobile AR client collecting information related to AR user context accessing; the Mobile AR client determining, according to the collected information and a current AR service environment, a demand and/or a status of the AR user context accessing; and the Mobile AR client managing the AR user context accessing according to the determined demand and/or status of the AR user context accessing.

According to another embodiment, another method for accessing an AR user context is provided, including: a Mobile AR server collecting information related to AR user context accessing; the Mobile AR server determining, according to the collected information and a current AR service environment, a demand and/or a status of the AR user context accessing; and the Mobile AR server notifying, according to the determined demand and/or status of the AR user context accessing, a Mobile AR client to manage the AR user context accessing.

In the embodiments of the present invention, the AR user context accessing is managed according to the demand and/or status of the AR user context accessing, which solves the problem in the prior art that the AR user context accessing cannot be dynamically managed, thereby achieving the technical effect of dynamically managing the AR context.

### Brief Description of the Drawings

Drawings, provided for further understanding of the present invention and forming a part of the present application, are used to explain the present invention together with illustrative embodiments of the present invention rather than to limit the present invention. In the accompanying drawings:
Fig. 1 is a system structural diagram for implementing an AR service according to an embodiment of the present invention;
Fig. 2 is a preferred structural diagram of a system for accessing an AR user context according to an embodiment of the present invention;
Fig. 3 is a preferred flow chart of a method for accessing an AR user context according to an embodiment of the present invention;
Fig. 4 is a preferred flow chart of an optimization method for accessing an AR user context according to an embodiment of the present invention;
Fig. 5 is a preferred flow chart of a method for transmitting an AR terminal context according to an embodiment of the present invention;
Fig. 6 is another preferred flow chart of a method for accessing an AR user context according to an embodiment of the present invention;
Fig. 7 is a preferred flow chart of an optimization method for accessing an AR user context according to an embodiment of the present invention;
Fig. 8 is a preferred flow chart of a method for transmitting an AR terminal context according to an embodiment of the present invention;
Fig. 9 is another preferred flow chart of an optimization method for accessing an AR user context according to an embodiment of the present invention;
Fig. 10 is another preferred flow chart of a method for transmitting an AR terminal context according to an embodiment of the present invention;
Fig. 11 is yet another preferred flow chart of an optimization method for accessing an AR user context according to an embodiment of the present invention; and
Fig. 12 is yet another preferred flow chart of a method for transmitting an AR terminal context according to an embodiment of the present invention.

### Detailed Description of the Embodiments

The present invention will be described in detail below with reference to the accompanying drawings and in conjunction with the embodiments. It should be noted that, in case of no conflict, the embodiments in the present application and the features in the embodiments can be combined with each other.

### Embodiment 1

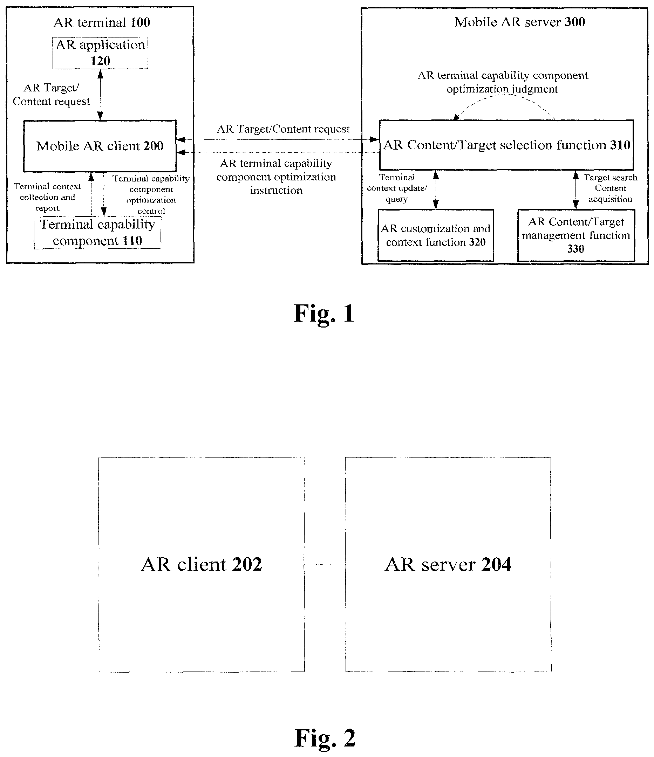

As shown in Fig. 1, a system for implementing an AR service according to an embodiment of the present invention includes: an AR terminal **100,** a Mobile AR client **200,** and a Mobile AR server **300.** The AR terminal **100** may be an intelligent mobile terminal used by a user which has one or more terminal side capability components required for implementing a Mobile AR service. The Mobile AR client **200** is configured to request the Mobile AR server **300** to obtain an AR Target and/or content according to a request of the user. The Mobile AR server **300** is a functional entity deployed at the network side and is responsible for searching for the AR Target according to the request, selecting and obtaining the AR Content, and delivering the AR Target and/or AR Content to the AR terminal **100.**

The AR terminal **100** is a mobile terminal used by the user which has the AR service function. The terminal can, in addition to providing the basic communication function, also provide an AR service experience for the user. The terminal may further include: one or more terminal capability components **110,** an AR Application **120,** and a Mobile AR client **200.**

Each terminal capability component **110** is responsible for collecting and displaying the information required for Mobile AR service implementation. The one or more terminal capability components **110** may include: a camera used for shooting in real time the live-action information (Camera View) in the physical world around the user, and of course, a camera with a video memory function may be used to cache the captured live-action information in real time; a display screen presenting for the user the AR Content view (Augmented Reality View, referred to as AR View) which is embroidered and rendered by the AR Content from the live-action information shot by the camera; a Global Positioning System (GPS) module communicating with the GPS satellite and providing location information about the terminal (e.g., latitude and longitude information) in real time; a compass and a sensor used for collecting user terminal status, for example, camera orientation, angle with respect to the ground, and so on; and modules like radio frequency identification (RFID) reader, two-dimension code scanner, image recognition, computer visual processing, and so on which are configured to realize the feature scan, input and extraction, etc. of the AR Target.

The AR Application **120** provides terminal side application programs which realize the Mobile AR service. The AR Application **120** accesses AR service underlying support capabilities provided by the Mobile AR client **200,** and on the basis of the AR service underlying support capabilities, provides different forms of AR service experience, such as AR multimedia advertisement application, AR navigation application, AR game application, and so on.

The Mobile AR client **200** is a functional entity at the terminal side of a Mobile AR service system. The Mobile AR client **200** accesses the real-time state of the AR terminal **100** collected by the one or more terminal capability components **110** (such as a Global Positioning System (GPS), a compass, a sensor, etc.), requests the Mobile AR server **300** to obtain the AR Target and/or AR Content, and controls the fused display of the obtained AR Content and the live action shot by the camera. The Mobile AR client **200** returns the requested information to the AR Application **120,** and provides supporting capabilities like user interaction support, AR measurement report, and so on.

The Mobile AR server **300** is a functional entity at the network side of the Mobile AR service system. The Mobile AR server **300** is responsible for providing, according to the request of the Mobile AR client **200** and AR customization and context settings, the user with services like AR Target searching, AR Content selection and acquisition, AR Target and/or AR Content delivery, and so on. The Mobile AR server **300** mainly includes the following functional entities:
1) An AR Content/Target selection function **310** in the Mobile AR server **300** is responsible for searching for an AR Target and selecting and obtaining an AR Content, according to a request received from the Mobile AR client **200** or a push request related to the delivery of the AR Target and/or AR Content.
2) An AR customization and context function **320** in the Mobile AR server **300** is responsible for managing the user customized preferences and user context.

The setting and management of the user customized preferences include at least one of:
1) AR Target searching preference, such as search radius, search category, and AR Target features;
2) AR Content acquisition preference, such as AR Content features, and so on;
3) AR Target and/or AR Content pushing settings, such as preset user context (user location, terminal state) in the pushing conditions, and preset pushing time in the pushing conditions;
4) collection and use of the user context.

In each preferred embodiment of the present invention, the user context may refer to current status information about a user and a terminal used thereby, including:
1) current state of the user, such as user geological location, user presentation information.
2) state of the AR terminal **100,** such as screen size, residual electric quantity, storage space, and so on.

An AR Content/Target management function **330** in the Mobile AR server **300** is responsible for storing and managing information related to AR Target deployment and AR Content distribution, mainly including:
1) management of AR Target deployment information, at least including: AR Target identifier, the type, classification, and description of the AR Target, related AR Content identifier, relationship with other AR Targets;
2) management of related AR Content distribution information, at least including: AR Target identifier, related AR Target identifier, AR Content distribution status, AR Content deployment rule, and AR Content access address, access control policy, and so on;
3) management of AR Content cache policy;
4) management of AR Content local cache.

When an AR Target/Content is searched on the basis of the terminal location, the reported terminal location is used not only to search for the AR Target/Content, but also to display in real time the AR Target/Content accordingly, both of which have different requirements for positioning accuracy of the terminal. If the search center has a relatively large distance from the AR Target/Content deployed by the system, even though the terminal capability component **110** (the GPS module) at this moment works continuously to collect and report the terminal location and is able to accurately search for the AR Target, displaying the Target/Content has little value, but consumes much electricity instead. In a preferred embodiment of the present invention, the terminal context accessing can be optimized according to the distance between the user and the target deployment location: when the user is far from the AR Target, no accurate positioning measurement is conducted, the number of location collection and report times is managed to be reduced under the premise of approximate positioning of the terminal, and accurate positioning of the terminal location is conducted when the user is near the AR Target.

When an AR Target/Content is searched on the basis of image recognition, the reported terminal location is used to narrow down the search scope of the AR Target/Content to improve the efficiency of feature matching. In outdoor situations, the terminal location reported by the GPS module is used to designate the scope of AR Targets/Contents to be matched, so as to be able to perform optimization control on the terminal positioning accuracy according to the number of AR Targets/Contents deployed near the image shooting location. In indoor situations, since the satellite signal is relatively weak, the GPS module cannot work, and if the distance to the target deployed outdoors is relatively far, terminal location collection may be temporarily suspended and target identification can be performed using the recently known location of the terminal or the currently matched target as a benchmark.

In this preferred embodiment, according to an operation instruction of a user, the AR Application **120** requests the Mobile AR client **200** to access the AR Target and/or AR Content. The Mobile AR client **200** requests the one or more terminal capability components **110** to collect the AR terminal **100** context, including: current terminal location (e.g., GPS latitude and longitude), current terminal orientation, image captured by the current terminal camera, etc. According to the terminal settings, the one or more terminal capability components **110** collect, according to the default operating mode, the above-mentioned AR terminal context, including the GPS device positioning accuracy, and report same to the Mobile AR client **200.** The Mobile AR client **200** creates and sends an AR Target/Content acquisition request to the Mobile AR server **300** according to the reported AR terminal context and the user input preferences (e.g., search radius, target features, etc.).

The AR Content/Target selection function **310** in the Mobile AR server **300** extracts an AR Target/Content acquisition parameter in the request, and updates the user AR terminal context recorded by the AR customization and context function **320,** including: current location of the terminal, operating state (on, off) and operating mode (positioning accuracy) of the one or more terminal capability components, etc.

The AR Content/Target selection function **310** sends an AR Target request and/or AR Content acquisition request to the AR Content/Target management function **330** in the Mobile AR server **300.** The AR Content/Target management function **330** performs an AR Target search process, including: geological location-based AR Target search, feature matching-based AR Target search, according to the AR terminal context information carried in the request and the user customized preferences; and performs an AR Content acquisition process, including: AR Content deployment rule-based content selection.

The AR Content/Target selection function **310** in the Mobile AR server **300** judges whether to perform optimization control on the behavior of one or more user AR terminal capability components according to the following information related to the handling of the AR Target/Content acquisition request in combination with the operating mode of the one or more user AR terminal capability components recorded in the AR customization and context function **320** and the user customized preferences. The judgment procedure includes:
1) The closest distance between the deployment location of the obtained AR Target and the current terminal location is calculated.
   If the current location of the user terminal is far from the closest AR Target which is found, for example, 1 kilometer away, but the AR terminal capability component GPS device works in a high accuracy mode; or,
   if the current location of the user terminal is near the closest AR Target which is found, for example, 50 meters away, but the AR terminal capability component GPS device works in a low accuracy mode;
   at the same time, the user customized preference settings allow to perform optimization control, then the AR Content/Target selection function **310** judges that optimization control needs to be performed on the terminal capability component and determines the type and parameters of the optimization control, including: reducing or increasing the positioning accuracy of the AR terminal capability component GPS device.
2) The number of AR Targets to be matched in the search scope determined according to the current location of the terminal is calculated.
   If the number of AR Targets to be matched in the search scope which is determined according to the current location of the terminal is relatively large, for example, 10,000, but the AR terminal capability component GPS device works in a low accuracy mode; or,
   if the number of AR Targets to be matched in the search scope which is determined according to the current location of the terminal is relatively small, for example, 100, but the AR terminal capability component GPS device works in a high accuracy mode;
   at the same time, the user customized preference settings allow to perform optimization control, then the AR Content/Target selection function **310** judges that optimization control needs to be performed on the terminal capability component and determines the type and parameters of the optimization control, including: increasing or reducing the positioning accuracy of the AR terminal capability component GPS device.
3) The closest distance between the AR Targets deployed outdoors and the current indoor identified Target is calculated.
   If the current location of the user terminal is far from the closest AR Target which is deployed outdoors, for example, 1 kilometer away, but the positioning function of the AR terminal capability component GPS device is still on;
   at the same time, the user customized preference settings allow to perform optimization control, then the AR Content/Target selection function **310** judges that optimization control needs to be performed on the terminal capability component and determines the type and parameters of the optimization control, including: pausing the positioning function of the AR terminal capability component GPS device and the estimated pause duration.

If it is determined that optimization control needs to be performed on one or more AR terminal capability components, then the AR Content/Target selection function **310** generates, according to the determined optimization control type and parameters, an AR terminal capability component optimization control instruction, and returns same to the Mobile AR client **200.**

Without loss of generality, the AR terminal capability component optimization control instruction can not only be returned to the Mobile AR client via an AR Target/Content acquisition response, but also be sent to the Mobile AR client via other messages independent of the AR Target/Content acquisition message, such as:
1) the Mobile AR client obtains the optimization control instruction via a subscription notification mechanism; or,
2) the Mobile AR server actively pushes the optimization control instruction to the Mobile AR client.

The Mobile AR client **200** returns the obtained AR Target/Content to the AR Application **120;** the Mobile AR client **200** sends, according to the received optimization instruction, a terminal capability component optimization control request to the one or more terminal capability components **110,** so as to dynamically adjust, according to the service execution status of the Mobile AR system, the AR terminal context accessing behavior of the one or more terminal capability components.

### Embodiment 2

Fig. 2 is a preferred structural diagram of a system for accessing an AR user context according to an embodiment of the present invention. The system includes: a Mobile AR client **202** and a Mobile AR server **204.**

In each embodiment of the present invention, the AR user context is a set of dynamic information used for describing the current state of the AR user and the surrounding environment thereof. Such a set of dynamic information can be obtained from many sources, for example, the above-mentioned sources may include: an Open Mobile Alliance (OMA) enabler (OMA Enabler).

In this preferred embodiment, the optimization of the AR user context accessing can be realized by improving the Mobile AR client **202.** Specifically, in the process of optimization, the Mobile AR client **202** collects information related to AR user context accessing; and then determines a demand and/or status of the AR user context accessing according to the collected information and a current AR service environment; and then manages the AR user context accessing according to the determined demand and/or status of the AR user context accessing. In this preferred embodiment, managing the AR user context accessing according to the demand and/or status of the AR user context accessing solves the problem in the prior art that the AR user context accessing cannot be dynamically managed, thereby achieving the technical effect of dynamically managing the AR context.

As an alternative solution, the Mobile AR client **202** and the Mobile AR server **204** can optimize the AR user context accessing together. Specifically, the Mobile AR server **204** collects information related to the AR user context accessing, and then determines a demand and/or status of the AR user context accessing according to the collected information and the current AR service environment, and then notifies, according to the determined demand and/or status of the AR user context accessing, the AR client **202** to manage the AR user context accessing. In this preferred embodiment, managing the AR user context accessing according to the demand and/or status of the AR user context accessing solves the problem in the prior art that the AR user context accessing cannot be dynamically managed, thereby achieving the technical effect of dynamically managing the AR context.

Preferably, in each of the above-mentioned preferred embodiments, managing the AR user context accessing includes: optimizing the accessing of an AR terminal capability. For example, the optimization operation may include: changing the AR terminal positioning accuracy and/or changing the AR terminal positioning mode. Changing the positioning accuracy and/or positioning mode of the AR terminal can reduce the power consumption in one or more capability components of the AR terminal, thereby solving the problem in the prior art that the battery life of the AR terminal is shortened due to the power consumption of the capability components, and thus achieving the technical effect of prolonging the battery life.

In each of the above-mentioned embodiments, the capability component is a GPS component. Of course, the present invention is not limited to this.

### Embodiment 3

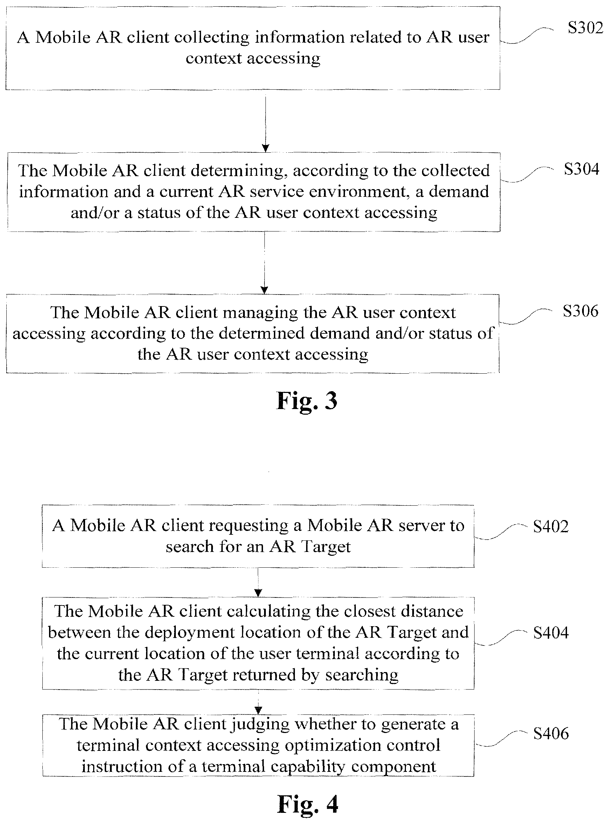

Fig. 3 is a preferred flow chart of a method for accessing an AR user context according to an embodiment of the present invention. The method for accessing an AR user context includes the following steps:
S302, a Mobile AR client collects information related to AR user context accessing;
S304, the Mobile AR client determines, according to the collected information and a current AR service environment, a demand and/or a status of the AR user context accessing; and
S306, the Mobile AR client manages the AR user context accessing according to the determined demand and/or status of the AR user context accessing.

In this preferred embodiment, managing the AR user context accessing according to the demand and/or status of the AR user context accessing solves the problem in the prior art that the AR user context accessing cannot be dynamically managed, thereby achieving the technical effect of dynamically managing the AR context.

In each of the preferred embodiments of the present invention, preferably, the information related to AR user context accessing includes: different AR terminal capabilities.

In each of the preferred embodiments of the present invention, preferably, the information about AR terminal capabilities includes: accessibility and/or current operating state.

In each of the preferred embodiments of the present invention, preferably, the information related to AR user context accessing includes: AR terminal positioning capability.

In each of the preferred embodiments of the present invention, preferably, the information about AR terminal positioning capability includes at least one of: AR terminal positioning accuracy, and AR terminal positioning mode.

In each of the preferred embodiments of the present invention, preferably, the AR terminal positioning mode includes at least one of: GPS positioning, base station positioning and wireless fidelity (Wi-Fi) positioning.

In each of the preferred embodiments of the present invention, preferably, the information related to AR user context accessing includes: enabled network support capability.

In each of the preferred embodiments of the present invention, preferably, the enabled network support capability includes: one or more OMA capability components.

In each of the preferred embodiments of the present invention, preferably, the Mobile AR client determines the demand of the AR user context accessing in the following steps: the Mobile AR client obtaining the current AR service environment; and the Mobile AR client determining, according to the obtained current AR service environment, the demand of the AR user context accessing.

In each of the preferred embodiments of the present invention, preferably, the Mobile AR client determines the status of the AR user context accessing in the following steps: the Mobile AR client obtains the current AR service environment; and the Mobile AR client determines, according to the obtained current AR service environment, the demand of a current AR user context accessing; the Mobile AR client determines, according to the collected information, a capability of the current AR user context accessing; and the Mobile AR client determines the status of the AR user context accessing by comparing the determined demand of the current AR user context accessing with the determined capability of the current AR user context accessing.

In each of the preferred embodiments of the present invention, preferably, the step of the Mobile AR client obtaining the current AR service environment includes: the Mobile AR client obtains the distance between a deployment location of a found AR Target and a user location.

In each of the preferred embodiments of the present invention, preferably, the step of the Mobile AR client obtaining the current AR service environment includes: the Mobile AR client obtains the closest distance between deployment locations of other un-obtained AR Targets returned by searching and the user location.

In each of the preferred embodiments of the present invention, preferably, the step of the Mobile AR client obtaining the current AR service environment includes: the Mobile AR client obtains the number of nearby AR Targets to be identified which are returned by searching.

In each of the preferred embodiments of the present invention, preferably, the information about the demand of the AR user context accessing includes: the type of AR terminal capability which needs to be accessed; or the type of enabled network support capability which needs to be accessed.

In each of the preferred embodiments of the present invention, preferably, the information about the status of the AR user context accessing includes: the type of an AR terminal capability, which needs to be optimized, in one or more capabilities of the current AR user context accessing corresponding to the demand of the current AR user context accessing; or the type of an enabled network support capability, which needs to be optimized, in the one or more capabilities of the current AR user context accessing corresponding to the demand of the current AR user context accessing.

In each of the preferred embodiments of the present invention, preferably, the information about the current AR service environment includes at least one of: the closest distance between a deployment location of a found AR Target and a user location; the closest distance between deployment locations of other un-obtained AR Targets and the user location; and the number of AR Targets to be identified near the Mobile AR client.

In each of the preferred embodiments of the present invention, preferably, the step of managing the AR user context accessing includes: accessing an appropriate AR terminal capability.

In each of the preferred embodiments of the present invention, preferably, the step of managing the AR user context accessing includes: optimizing the accessing of the AR terminal capability.

In each of the preferred embodiments of the present invention, preferably, the AR terminal capability includes: AR terminal positioning capability.

In each of the preferred embodiments of the present invention, preferably, the step of optimizing the AR terminal capability accessing includes: changing the AR terminal positioning accuracy and/or changing the AR terminal positioning mode.

In each of the preferred embodiments of the present invention, preferably, the step of optimizing the AR terminal capability accessing includes: pausing or restarting AR terminal positioning.

In each of the preferred embodiments of the present invention, preferably, the AR terminal capability is used for accessing the AR user context.

In each of the preferred embodiments of the present invention, preferably, the step of managing the AR user context accessing includes: utilizing the enabled network support capability.

In each of the preferred embodiments of the present invention, preferably, the step of utilizing the enabled network support capability includes: utilizing the enabled network support capability to transmit a dynamically changed AR terminal capability.

Preferred embodiments about AR user context accessing management performed by an AR client are described below in conjunction with the accompanying drawings.

Fig. 4 is a preferred flow chart of the optimization method for accessing an AR user context according to an embodiment of the present invention. As shown in Fig. 4, the optimization method for accessing an AR user context according to an embodiment of the present invention specifically includes the following steps:
S402, a Mobile AR client requests a Mobile AR server to search for an AR Target;
S404, the Mobile AR client calculates the closest distance between the deployment locations of one or more AR Targets and the current location of a user terminal according to one or more AR Target returned by searching; and
S406, the Mobile AR client judges whether to generate a terminal context accessing optimization control instruction of a terminal capability component according to the obtained closest distance (i.e., judges whether to manage AR user context accessing).

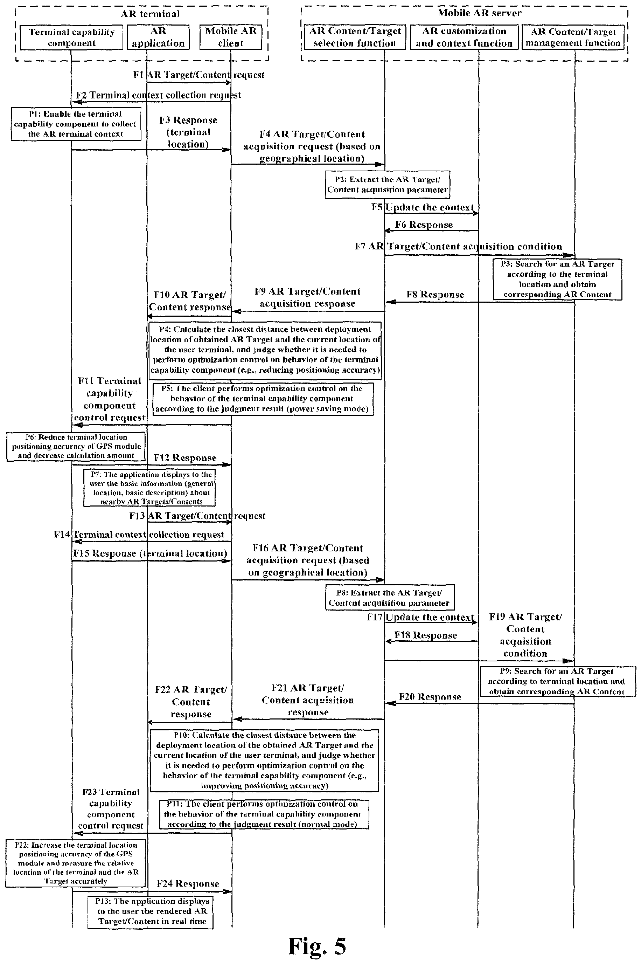

Fig. 5 is a preferred flow chart of the method for transmitting the AR terminal context according to an embodiment of the present invention. As shown in Fig. 5, the method for transmitting the AR terminal context specifically includes the following steps.

In steps F1-F3, an AR Application requests, according to an operation instruction of a user or AR Application service logic, a Mobile AR client to obtain an AR Target/Content. The Mobile AR client sends a terminal context collection request to a terminal capability component, instructs the terminal capability component to enable relevant functions of the terminal capability component to collect and report an AR terminal context, including: terminal location (e.g., GPS latitude and longitude), terminal orientation, etc.

In steps F4-F6, the Mobile AR client creates and sends an AR Target/Content acquisition request to a Mobile AR server, wherein the request carries the AR terminal context: GPS location and orientation of the terminal (assuming that in this embodiment the AR Targets are searched on the basis of terminal location), etc., and user input preferences, e.g., search radius, target features, etc. The AR Content/Target selection function in the Mobile AR server extracts the above-mentioned AR Target/Content acquisition parameter, and updates the user AR terminal context in the AR customization and context function.

In steps F7-F8, the AR Content/Target selection function constructs an AR Target search condition and/or AR Content acquisition condition, and sends same to the AR Content/Target management function. The AR Content/Target management function searches for an AR Target according to the current terminal location and search radius in the condition and selectively obtains the related AR Content. In addition, in order to provide the basis of judgment for AR terminal, capability component optimization, the AR Content/Target management function returns the AR Target to the Mobile AR client, wherein one of the attributes of the AR Target is the deployment information about the AR Target. Preferably, the AR Content/Target management function also sends the operating mode of the user AR terminal capability component recorded in the AR customization and context function to the Mobile AR client through the AR Content/Target selection function, and preferably, also sent with the above-mentioned closest distance is the obtained AR Content and/or Target.

In steps F9-F10, the Mobile AR client calculates the closest distance between the deployment location of the found AR Target and the current location of the user terminal, and judges whether it is needed to perform optimization control on the behavior of the AR terminal capability component in combination with the operating mode of the user AR terminal capability component recorded in the AR customization and context function and the user customized preferences.

This embodiment assumes that the Mobile AR client judges that it is needed to perform optimization control on the behavior of the AR terminal capability component (since the distance to the target is relatively far, it is not necessary to perform accurate positioning on the terminal location), and thereby generates an AR terminal capability component optimization control instruction, including: reducing GPS device positioning accuracy, and adjusted GPS device positioning accuracy, etc.

Preferably, the above-mentioned optimization control on the behavior of the AR terminal capability component may further include: changing the AR terminal positioning mode, for example, changing GPS positioning into base station positioning or Wi-Fi positioning. Since the power consumption required for GPS positioning is higher than that required for base station positioning or Wi-Fi positioning, the above-mentioned operation of changing the AR terminal positioning mode can reduce the electricity consumption of the AR terminal capability component.

In steps F11-F12, the Mobile AR client sends a control request to the terminal capability component according to the control type and control parameter in the received AR terminal capability component optimization control instruction. In this embodiment, the terminal capability component GPS device reduces the terminal location positioning accuracy thereof according to the request (e.g., adjusted from 10 m to 100 m), which decreases the communication volume and calculation amount between the GPS device and the satellite, thereby reducing the electricity consumption.

In steps F13-F15, after a period of time, the AR Application again requests the Mobile AR client to obtain the AR Target/Content. The Mobile AR client sends a terminal context collection request to the terminal capability component, the terminal capability component GPS device collects and reports the AR terminal location in an optimization mode (relatively low accuracy).

In steps F16-F22, according to steps similar to foregoing steps F4-F10, the Mobile AR client creates and sends an AR Target/Content acquisition request to the Mobile AR server to obtain the AR Target/Content. The Mobile AR server calculates, according to one or more found AR Targets, the closest distance between the one or more deployment locations of the one or more found AR Targets and the current location of the user terminal, and sends the above-mentioned closest distance to the Mobile AR client so that the Mobile AR client judges whether to generate a terminal context accessing optimization control instruction of a terminal capability component.

This embodiment assumes that, at this moment, the user terminal location is relatively near the deployment location of the found AR Target (e.g., 50 m), and therefore, the terminal context accessing optimization control instruction improves the positioning accuracy of the terminal capability component GPS device.

In steps F23-F24, the Mobile AR client sends a control request to the terminal capability component according to the control type and control parameter in the AR terminal capability component optimization control instruction. In this embodiment, the terminal capability component GPS device improves the terminal location positioning accuracy thereof according to the request (e.g., adjusted from 100 m to 10 m), so as to measure the relative location between the terminal and the AR Target more accurately, thereby allowing the AR Application to display and render the obtained AR Target/Content in real time.

### Embodiment 4

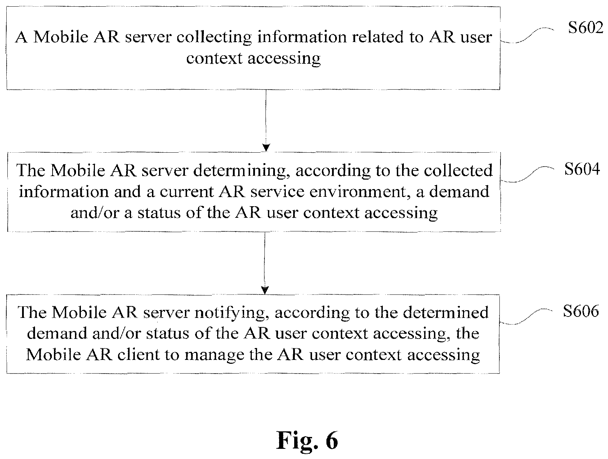

Fig. 6 is another preferred flow chart of the method for accessing an AR user context according to an embodiment of the present invention. The method for accessing an AR user context includes the following steps:
S602, a Mobile AR server collects information related to AR user context accessing;
S604, the Mobile AR server determines, according to the collected information and a current AR service environment, a demand and/or a status of the AR user context accessing; and
S606, the Mobile AR server notifies, according to the determined demand and/or status of the AR user context accessing, the Mobile AR client to manage the AR user context accessing.

In this preferred embodiment, managing the AR user context accessing according to the demand and/or status of the AR user context accessing solves the problem in the prior art that the AR user context accessing cannot be dynamically managed, thereby achieving the technical effect of dynamically managing the AR context.

In each of the preferred embodiments of the present invention, preferably, the information related to AR user context accessing includes: different AR terminal capabilities.

In each of the preferred embodiments of the present invention, preferably, the information about AR terminal capabilities includes: accessibility and/or current operating state.

In each of the preferred embodiments of the present invention, preferably, the information related to AR user context accessing includes: AR terminal positioning capability.

In each of the preferred embodiments of the present invention, preferably, the information about AR terminal positioning capability includes at least one of: AR terminal positioning accuracy, and AR terminal positioning mode.

In each of the preferred embodiments of the present invention, preferably, the AR terminal positioning mode includes at least one of: GPS positioning, base station positioning and Wi-Fi positioning.

In each of the preferred embodiments of the present invention, preferably, the information related to AR user context accessing includes: enabled network support capability.

In each of the preferred embodiments of the present invention, preferably, the enabled network support capability includes: one or more OMA capability components.

In each of the preferred embodiments of the present invention, preferably, the Mobile AR server determines the demand of the AR user context accessing in the following steps: the Mobile AR server obtains the current AR service environment; and the Mobile AR server determines, according to the obtained current AR service environment, the demand of the AR user context accessing.

In each of the preferred embodiments of the present invention, preferably, the Mobile AR server determines the status of the AR user context accessing in the following steps: the Mobile AR server obtains the current AR service environment; and the Mobile AR server determines, according to the obtained current AR service environment, the demand of a current AR user context accessing; the Mobile AR server determines, according to the collected information, a capability of the current AR user context accessing; and the Mobile AR server determines the status of the AR user context accessing by comparing the determined demand of the current AR user context accessing with the determined capability of the current AR user context accessing.

In each of the preferred embodiments of the present invention, preferably, the step of the Mobile AR server obtaining the current AR service environment includes: the Mobile AR server obtains the distance between a deployment location of a found AR Target and a user location.

In each of the preferred embodiments of the present invention, preferably, the step of the Mobile AR server obtaining the current AR service environment includes: the Mobile AR server obtains the closest distance between deployment locations of other un-obtained AR Targets returned by searching and the user location.

In each of the preferred embodiments of the present invention, preferably, the step of the Mobile AR server obtaining the current AR service environment includes: the Mobile AR server obtains the number of nearby AR Targets to be identified which are returned by searching.

In each of the preferred embodiments of the present invention, preferably, the information about the demand of the AR user context accessing includes: the type of an AR terminal capability which needs to be accessed; or the type of an enabled network support capability which needs to be accessed.

In each of the preferred embodiments of the present invention, preferably, the information about the status of the AR user context accessing includes: the type of an AR terminal capability, which needs to be optimized, in one or more capabilities of the current AR user context accessing corresponding to the demand of the current AR user context accessing; or the type of an enabled network support capability, which needs to be optimized, in one or more capabilities of the current AR user context accessing corresponding to the demand of the current AR user context accessing.

In each of the preferred embodiments of the present invention, preferably, the information about the current AR service environment includes at least one of: the closest distance between a deployment location of a found AR Target and a user location; the closest distance between deployment locations of other un-obtained AR Targets and the user location; and the number of AR Targets to be identified near the Mobile AR client.

In each of the preferred embodiments of the present invention, preferably, the step of managing the AR user context accessing includes: accessing an appropriate AR terminal capability.

In each of the preferred embodiments of the present invention, preferably, the step of managing the AR user context accessing includes: optimizing the AR terminal capability accessing.

In each of the preferred embodiments of the present invention, preferably, the AR terminal capability includes: AR terminal positioning capability.

In each of the preferred embodiments of the present invention, preferably, the step of optimizing the AR terminal capability accessing includes: changing the AR terminal positioning accuracy and/or changing the AR terminal positioning mode.

In each of the preferred embodiments of the present invention, preferably, the step of optimizing the AR terminal capability accessing includes: pausing or restarting AR terminal positioning.

In each of the preferred embodiments of the present invention, preferably, the AR terminal capability is used for accessing the AR user context.

In each of the preferred embodiments of the present invention, preferably, the step of managing the AR user context accessing includes: utilizing the enabled network support capability.

In each of the preferred embodiments of the present invention, preferably, the step of utilizing the enabled network support capability includes: utilizing the enabled network support capability to transmit a dynamically changed AR terminal capability.

### Embodiment 5

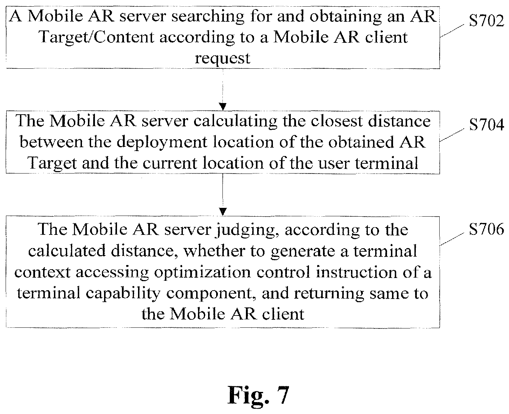

Fig. 7 is a preferred flow chart of the optimization method for accessing an AR user context according to an embodiment of the present invention. As shown in Fig. 7, the optimization method for accessing an AR user context according to an embodiment of the present invention specifically includes the following steps:
S702, a Mobile AR server searches for an AR Target according to a request from a Mobile AR client, and selects and obtains an AR Content;
S704, the Mobile AR server calculates the closest distance between the deployment location of a found AR Target and the current location of a user terminal; and
S706, the Mobile AR server judges, according to the calculated distance, whether to generate a terminal context accessing optimization control instruction of a terminal capability component (i.e., judges whether to manage AR user context accessing), and returns same to the Mobile AR client.

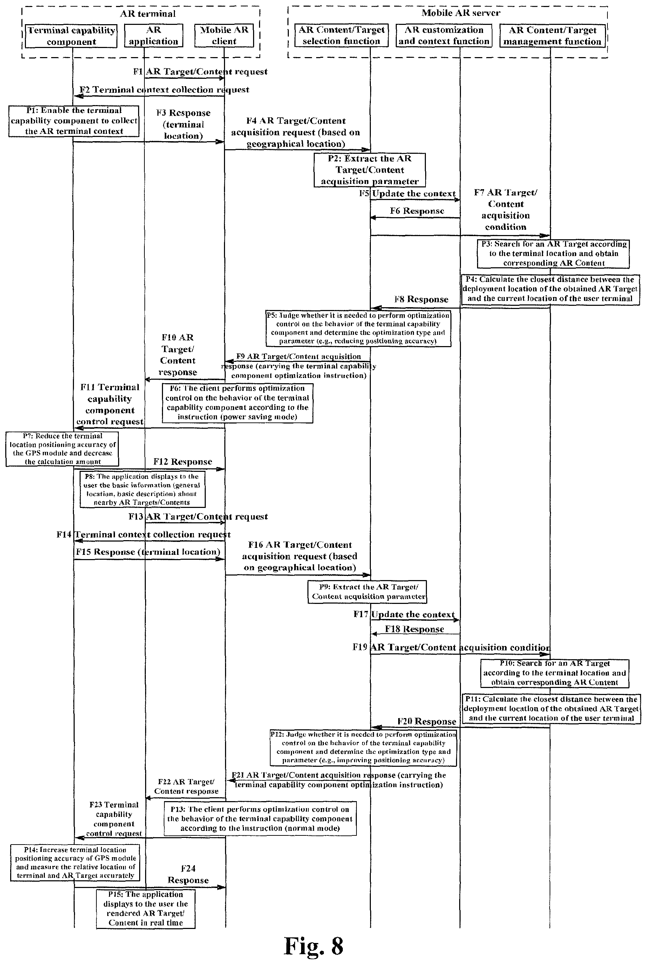

Fig. 8 is a preferred flow chart of the method for transmitting the AR terminal context according to an embodiment of the present invention. As shown in Fig. 8, this example is a flow chart in which the Mobile AR server **300** receives from the Mobile AR client **200** a request for searching for the AR Target/Content on the basis of the terminal location, which specifically includes the following steps:
In steps F1-F3, an AR Application requests, according to an operation instruction of a user or AR Application service logic, a Mobile AR client to obtain an AR Target/Content. The Mobile AR client sends a terminal context collection request to a terminal capability component, instructs the terminal capability component to enable relevant functions of the terminal capability component to collect and report an AR terminal context, including: terminal location (e.g., GPS latitude and longitude), terminal orientation, etc.

In steps F4-F6, the Mobile AR client creates and sends an AR Target/Content acquisition request to a Mobile AR server, wherein the request carries the AR terminal context: GPS location and orientation of the terminal (assuming that in this embodiment the AR Targets are searched on the basis of terminal location), etc., and user input preferences, e.g., search radius, target features, etc. The AR Content/Target selection function in the Mobile AR server extracts the above-mentioned AR Target/Content acquisition parameter, and updates the user AR terminal context in the AR customization and context function.

In steps F7-F8, the AR Content/Target selection function constructs an AR Target search condition and/or AR Content acquisition condition, and sends same to the AR Content/Target management function. The AR Content/Target management function searches for an AR Target according to the current terminal location and search radius in the condition and selectively obtains the related AR Content. In addition, in order to provide the basis of judgment for AR terminal capability component optimization, the AR Content/Target management function calculates, in combination with the deployment information about the AR Target, the closest distance between the deployment location of the found AR Target and the current location of the user terminal.

In steps F9-F10, the AR Content/Target selection function judges whether it is needed to perform optimization control on the behavior of the AR terminal capability component according to the calculated distance in combination with the operating mode of the user AR terminal capability component recorded in the AR customization and context function and the user customized preferences.

This embodiment assumes that the AR Content/Target selection function judges that it is needed to perform optimization control on the behavior of the AR terminal capability component (since the distance to the target is relatively far, it is not necessary to perform accurate positioning on the terminal location), and thereby generates an AR terminal capability component optimization control instruction, including: reducing GPS device positioning accuracy, and adjusted GPS device positioning accuracy, etc. The Mobile AR server returns, through an AR Target/Content acquisition response, the obtained AR Target/Content together with the optimization control instruction to the Mobile AR client.

In steps F11-F12, the Mobile AR client sends a control request to the terminal capability component according to the control type and control parameter in the received AR terminal capability component optimization control instruction. In this embodiment, the terminal capability component GPS device reduces the terminal location positioning accuracy thereof according to the request (e.g., adjusted from 10 m to 100 m), which decreases the communication volume and calculation amount between the GPS device and the satellite, thereby reducing the electricity consumption.

Preferably, the above-mentioned optimization control on the behavior of the AR terminal capability component may further include: changing the AR terminal positioning mode, for example, changing GPS positioning into base station positioning or Wi-Fi positioning. Since the power consumption required for GPS positioning is higher than that required for base station positioning or Wi-Fi positioning, the above-mentioned operation of changing the AR terminal positioning mode can reduce the electricity consumption of the AR terminal capability component.

In steps F13-F15, after a period of time, the AR Application again requests the Mobile AR client to obtain the AR Target/Content. The Mobile AR client sends a terminal context collection request to the terminal capability component, the terminal capability component GPS device collects and reports the AR terminal location in an optimization mode (relatively low accuracy).

In steps F16-F22, according to steps similar to foregoing steps F4-F10, the Mobile AR client creates and sends an AR Target/Content acquisition request to the Mobile AR server to obtain the AR Target/Content. The Mobile AR server calculates, according to one or more found AR Targets, the closest distance between one or more deployment locations of the one or more found AR Targets and the current location of the user terminal, and judges whether to generate a terminal context accessing optimization control instruction of a terminal capability component, and returns same to the Mobile AR client.

This embodiment assumes that, at this moment, the user terminal location is relatively near to the deployment location of the found AR Target (e.g., 50 m), and therefore, the terminal context accessing optimization control instruction improves the positioning accuracy of the terminal capability component GPS device.

In steps F23-F24, the Mobile AR client sends a control request to the terminal capability component according to the control type and control parameter in the received AR terminal capability component optimization control instruction. In this embodiment, the terminal capability component GPS device improves the terminal location positioning accuracy thereof according to the request (e.g., adjusted from 100 m to 10m), so as to measure the relative location between the terminal and the AR Target more accurately, thereby allowing the AR Application to display and render the obtained AR Target/Content in real time.

### Embodiment 6

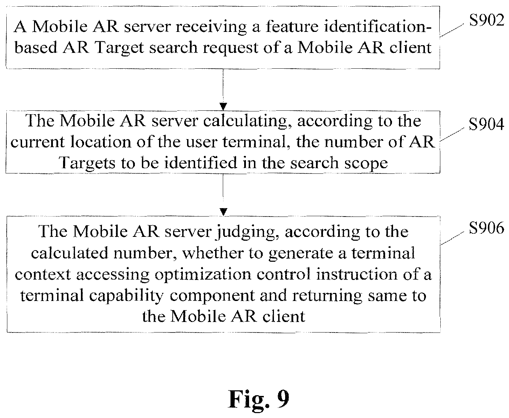

Fig. 9 is another preferred flow chart of the optimization method for accessing an AR user context according to an embodiment of the present invention. As shown in Fig. 9, the optimization method for accessing an AR user context according to an embodiment of the present invention specifically includes the following steps:
S902, a Mobile AR server receives a feature identification-based AR Target search request from a Mobile AR client;
S904, the Mobile AR server calculates, according to the current location of a user terminal, the number of AR Targets to be identified in the search scope; and
S906, the Mobile AR server judges, according to the calculated number, whether to generate a terminal context accessing optimization control instruction of a terminal capability component (i.e., judges whether to manage AR user context accessing), and returns the result to the Mobile AR client.

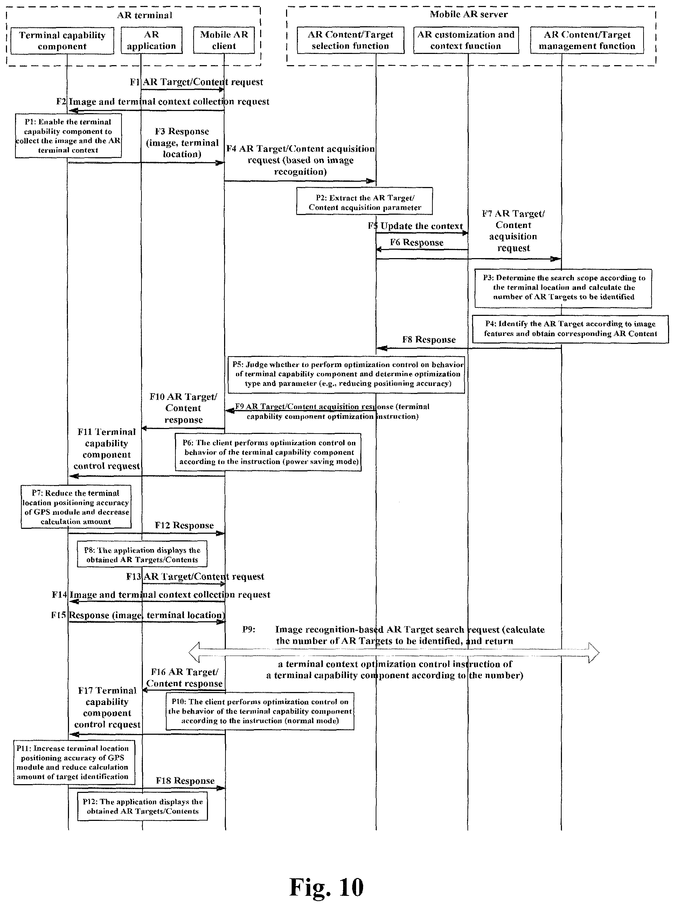

Fig. 10 is another preferred flow chart of the method for transmitting the AR terminal context according to an embodiment of the present invention. As shown in Fig. 10, this example is a flow chart in which the Mobile AR server **300** receives from the Mobile AR client **200** a request for searching for the AR Target/Content outdoors based on image recognition, which specifically the following steps:

In steps F1-F3, an AR Application requests, according to an operation instruction of a user or AR Application service logic, a Mobile AR client to obtain an AR Target/Content. The Mobile AR client sends a terminal context collection request to a terminal capability component, instructs the terminal capability component to enable relevant functions of the terminal capability component to collect and report an AR terminal context, including: terminal location (e.g., GPS latitude and longitude), terminal orientation, and image frames shot by a camera or image feature descriptor, etc.

In steps F4-F6, the Mobile AR client creates and sends an AR Target/Content acquisition request to the Mobile AR server, wherein the request carries the AR terminal context: terminal GPS location, orientation, and image frames to be identified (assuming that in this embodiment the AR Targets are searched on the basis of image recognition), etc. The AR Content/Target selection function in the Mobile AR server extracts the above-mentioned AR Target/Content acquisition parameter, and updates the user AR terminal context in the AR customization and context function.

In steps F7-F8, the AR Content/Target selection function constructs an AR Target search condition and/or AR Content acquisition condition, and sends same to the AR Content/Target management function. The AR Content/Target management function determines, according to the current terminal location in the condition, the search scope of the AR Targets to be matched, and performs AR Target matching according to the image features in the condition, and selectively obtains the related AR Content. In addition, in order to provide the basis of judgment for AR terminal capability component optimization, the AR Content/Target management function calculates, in combination with the AR Target deployment information, the number of AR Targets to be matched in the search scope.

In steps F9-F10, the AR Content/Target selection function judges whether it is needed to perform optimization control on the behavior of the AR terminal capability component according to the calculated number in combination with the operating mode of the user AR terminal capability component recorded in the AR customization and context function and the user customized preferences.

This embodiment assumes that the AR Content/Target selection function judges that it is needed to perform optimization control on the behavior of the AR terminal capability component (since the number of targets to be matched in the search scope is small, high accurate positioning is not necessary), and thereby generates an AR terminal capability component optimization control instruction, including: reducing GPS device positioning accuracy, and adjusted positioning accuracy, etc. The Mobile AR server returns, through an AR Target/Content acquisition response, the obtained AR Target/Content together with the optimization control instruction to the Mobile AR client.

In steps F11-F12, the Mobile AR client sending a control request to the terminal capability component according to the control type and control parameter in the received AR terminal capability component optimization control instruction. In this embodiment, the terminal capability component GPS device reduces the terminal location positioning accuracy thereof according to the request (e.g., adjusted from 10 m to 100 m), which decreases the communication volume and calculation amount between the GPS device and the satellite, thereby reducing the electricity consumption.

Preferably, the above-mentioned optimization control on the behavior of the AR terminal capability component may further include: changing the AR terminal positioning mode, for example, changing GPS positioning into base station positioning or Wi-Fi positioning. Since the power consumption required for GPS positioning is higher than that required for base station positioning or Wi-Fi positioning, the above-mentioned operation of changing the AR terminal positioning mode can reduce the electricity consumption of the AR terminal capability component.

In steps F13-F16, after a period of time, the AR Application again requests the Mobile AR client to obtain the AR Target/Content. The Mobile AR client sends a terminal context collection request to the terminal capability component, and the terminal capability component GPS device collects and reports the AR terminal location in an optimization mode (relatively low accuracy.

According to steps similar to foregoing steps F4-F10, the Mobile AR client creates and sends an AR Target/Content acquisition request to the Mobile AR server to obtain the AR Target/Content. The Mobile AR server determines, according to the current terminal location, the search scope of the AR Targets to be matched, calculates the number of AR Targets to be matched in the search scope, and judges whether to generate a terminal context accessing optimization control instruction of the terminal capability component, and returns same to the Mobile AR client.

This embodiment assumes that at this moment the number of AR Targets to be matched is relatively large (e.g., 1,000, and the calculation amount required by matching is large), and therefore, the terminal context accessing optimization control instruction improves the positioning accuracy of the terminal capability component GPS device.

In steps F17-F18, the Mobile AR client sends a control request to the terminal capability component according to the control type and control parameter in the received AR terminal capability component optimization control instruction. In this embodiment, the terminal capability component GPS device improves the terminal location positioning accuracy thereof according to the request (e.g., adjusted from 100 m to 10 m), so as to measure the relative location between the terminal and the AR Target more accurately, thereby narrowing down the search scope of the AR Targets to be matched and improving the efficiency of AR Target identification.

### Embodiment 7

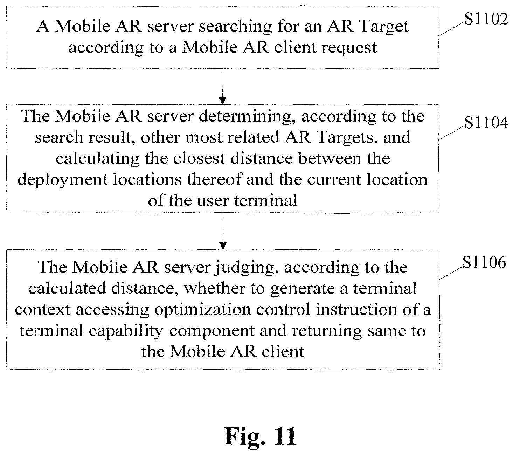

Fig. 11 is yet another preferred flow chart of the optimization method for accessing an AR user context according to an embodiment of the present invention. As shown in Fig. 11, the optimization method for accessing an AR user context according to an embodiment of the present invention specifically includes the following steps:
S 1102, a Mobile AR server searches for an AR Target according to a request from a Mobile AR client, and selects and obtains an AR Content;
S1104, the Mobile AR server determines, according to a found AR Target, other most related AR Targets, and calculates the closest distance between the deployment locations of other most related AR Targets and the current location of a user terminal; and
S1106, the Mobile AR server judges, according to the calculated distance, whether to generate a terminal context accessing optimization control instruction of a terminal capability component (i.e., judges whether to manage AR user context accessing), and returns same to the Mobile AR client.

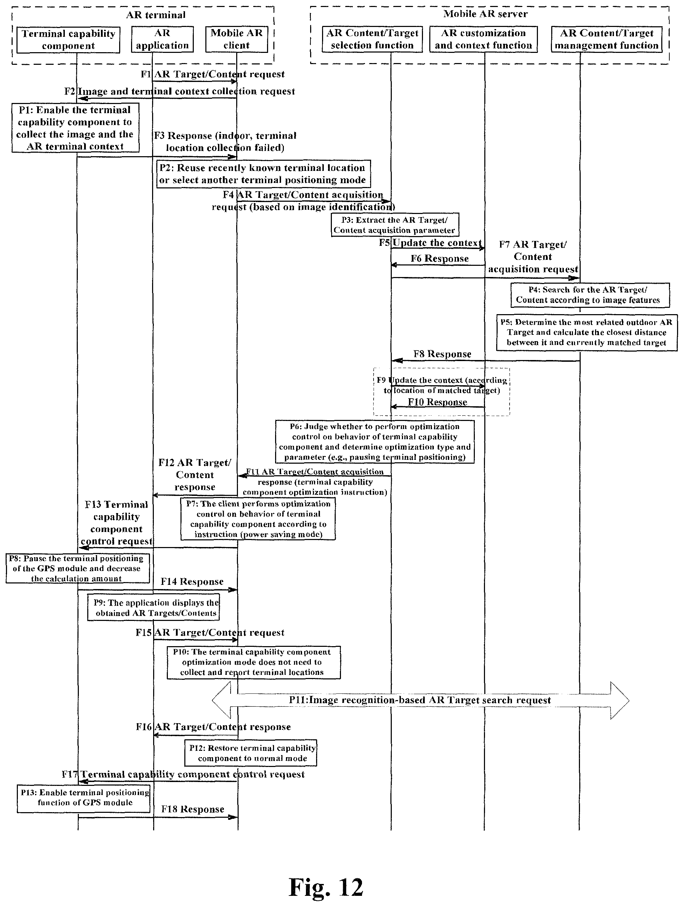

Fig. 12 is yet another preferred flow chart of the method for transmitting the AR terminal context according to an embodiment of the present invention. As shown in Fig. 12, this example is a flow chart in which the Mobile AR server **300** receives from the Mobile AR client **200** a request for searching for the AR Target/Content indoors based on image recognition, which specifically includes the following steps:
In steps F1-F3, an AR Application requests, according to an operation instruction of a user or AR Application service logic, a Mobile AR client to obtain an AR Target/Content. The Mobile AR client sends a terminal context collection request to a terminal capability component, instructs the terminal capability component to enable relevant functions of the terminal capability component to collect and report an AR terminal context, including: terminal location (e.g., GPS latitude and longitude), terminal orientation, and image frames shot by a camera or image feature descriptor, etc.

Since the satellite signal is weak indoors, the GPS device cannot locate the terminal, and the Mobile AR client either obtains terminal location information based on other positioning technologies (such as, base station triangulation positioning) or reuses the recently known terminal location, or cannot know the terminal location.

In steps F4-F6, the Mobile AR client creates and sends an AR Target/Content acquisition request to the Mobile AR server, wherein the request carries the AR terminal context: terminal location (optional), orientation, and image frames to be identified (assuming that in this embodiment the AR Targets are searched on the basis of image recognition), etc. The AR Content/Target selection function in the Mobile AR server extracts the above-mentioned AR Target/Content acquisition parameter, and updates the user AR terminal context in the AR customization and context function.

In steps F7-F8, the AR Content/Target selection function constructs an AR Target search condition and/or AR Content acquisition condition, and sends same to the AR Content/Target management function. The AR Content/Target management function determines, according to the current terminal location in the condition, the search scope of the AR Targets to be matched, and performs AR Target matching according to the image features in the condition, and selectively obtain the related AR Content. In addition, in order to provide the basis of judgment for AR terminal capability component optimization, the AR Content/Target management function determines, in combination with the AR Target deployment information, the most related outdoor AR Target, i.e., the AR Target which is deployed outdoors and is nearest to the current search scope, and calculate the closest distance between this AR Target and the currently matched target.

In steps F9-F10, alternatively, if the AR Target/Content acquisition request reuses the recently known terminal location or does not carry terminal location information, after having successfully completed the AR Target identification, the AR Content/Target selection function updates, according to the deployment location of the identified target, the user AR terminal context in the AR customization and context function.

In steps F11-F12, the AR Content/Target selection function judges whether to perform optimization control on the behavior of the AR terminal capability component according to the calculated distance in combination with the operating mode of the user AR terminal capability component GPS device recorded in the AR customization and context function and the user customized preferences.

This embodiment assumes that the AR Content/Target selection function judges that it is needed to perform optimization control on the behavior of the AR terminal capability component (since the distance to the most related outdoor AR Target is relatively far, GPS positioning is not necessary), and thereby generates an AR terminal capability component optimization control instruction, including: pausing GPS device positioning function, and the estimated pause duration, etc. The Mobile AR server returns, through an AR Target/Content acquisition response, the obtained AR Target/Content together with the optimization control instruction to the Mobile AR client.

In steps F13-F14, the Mobile AR client sends a control request to the terminal capability component according to the control type and control parameter in the received AR terminal capability component optimization control instruction. In this embodiment, the GPS device positioning function of the terminal capability component pauses according to the request, which reduces the communication volume and calculation amount between the GPS device and the satellite, thereby reducing electricity consumption.

In steps F15-F16, the AR Application again requests the Mobile AR client to obtain the AR Target/Content. The AR client sends a terminal context collection request to the terminal capability component. In the optimization mode, the terminal capability component GPS device does not need to enable the positioning function to measure the location of the AR terminal.

According to steps similar to foregoing steps F4-F12, the Mobile AR client creates and sends an AR Target/Content acquisition request to the Mobile AR server to obtain the AR Target/Content. The Mobile AR server determines the most related outdoor AR Target, calculates the distance between the most related outdoor AR Target and the currently identified AR Target, and judges whether to generate a terminal context accessing optimization control instruction of the terminal capability component, and returns same to the AR client.

In steps F17-F18, after the pause duration of the GPS device positioning function expires, the Mobile AR client sends a control request to the terminal capability component to instruct the terminal capability component to enable the GPS device positioning function.

In each of the above-mentioned embodiments, the Mobile AR server can instruct, according to the type of the received AR Target/Content search request (based on geographical location or based on feature identification) and the AR Target/Content search result (the distance to the AR Target and the number of targets deployed), the AR client to perform optimization control on one or more terminal capability component (a GPS module, various sensors). As such, the terminal location positioning accuracy of the terminal capability component can be changed to reduce the calculation amount of the terminal; the terminal location collection times of the terminal capability component can be reduced and the continuous operating time can be reduced; and the collection of the terminal location of the terminal capability component pauses, or a known terminal location can be reused. In this way, under the premise that the Mobile AR service needs are met, efficient accessing of the terminal context (which avoids repeated collection and report) is achieved, and electricity consumption of the terminal capability component (a GPS module, various sensors) is reduced.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations within the scope of the invention as defined in the appended claims.

## Claims

1. A method for accessing an Augmented Reality, AR, user context, **characterized by** comprising:
a Mobile AR client (202) collecting information related to AR user context accessing (S302), wherein the information related to the AR user context accessing comprises: different AR terminal capabilities, or AR terminal positioning capability, or enabled network support capability;
the Mobile AR client determining (S304), according to the collected information and a current AR service environment, a demand and/or a status of the AR user context accessing; and
the Mobile AR client managing (S306) the AR user context accessing according to the determined demand and/or status of the AR user context accessing, wherein managing the AR user context accessing comprises accessing an appropriate AR terminal capability, or optimizing the accessing of an AR terminal capability, or utilizing an enabled network support capability.

2. The method according to claim 1, **characterized in that** information about AR terminal capabilities comprises: accessibility and/or current operating state.

3. The method according to claim 1, **characterized in that**
information about the AR terminal positioning capability comprises at least one of: AR terminal positioning accuracy, and AR terminal positioning mode, preferably, the AR terminal positioning mode comprises at least one of: Global Positioning System, GPS, positioning, base station positioning and wireless fidelity, Wi-Fi, positioning; or,
the enabled network support capability comprises: one or more Open Mobile Alliance, OMA capability components.

4. The method according to claim 1, **characterized in that**
the Mobile AR client determining the demand of the AR user context accessing comprises: the Mobile AR client obtaining the current AR service environment; and the Mobile AR client determining, according to the obtained current AR service environment, the demand of the AR user context accessing; or,
the Mobile AR client determining the status of the AR user context accessing comprises: the Mobile AR client obtaining the current AR service environment; the Mobile AR client determining, according to the obtained current AR service environment, the demand of the current AR user context accessing; the Mobile AR client determining, according to the collected information, a capability of the current AR user context accessing; and the Mobile AR client determining the status of the AR user context accessing by comparing the determined demand of the current AR user context accessing with the determined capability of the current AR user context accessing.

5. The method according to claim 4, **characterized in that**
the Mobile AR client obtaining the current AR service environment comprises: the Mobile AR client obtaining a distance between a deployment location of a found AR Target and a user location; or, the Mobile AR client obtaining the closest distance between deployment locations of other un-obtained AR Targets returned by searching and the user location; or, the Mobile AR client obtaining the number of nearby AR Targets to be identified which are returned by searching; or,
information about the demand of the AR user context accessing comprises: the type of an AR terminal capability which needs to be accessed; or, the type of an enabled network support capability which needs to be accessed; or,
information about the status of the AR user context accessing comprises: the type of an AR terminal capability, which needs to be optimized, in one or more capabilities of the current AR user context accessing corresponding to the demand of the current AR user context accessing; or, the type of an enabled network support capability, which needs to be optimized, in one or more capabilities of the current AR user context accessing corresponding to the demand of the current AR user context accessing.

6. The method according to claim 1, **characterized in that** information about the current AR service environment comprises at least one of:
the closest distance between a deployment location of a found AR Target and a user location;
the closest distance between deployment locations of other un-obtained AR Targets and the user location; and
the number of AR Targets to be identified near the Mobile AR client.

7. The method according to claim 1, **characterized in that** the AR terminal capability comprises: AR terminal positioning capability; or, the AR terminal capability is used for accessing an AR user context.

8. The method according to claim 1, **characterized in that** optimizing the accessing of the AR terminal capability comprises: changing AR terminal positioning accuracy and/or changing an AR terminal positioning mode; or, pausing or restarting AR terminal positioning.

9. The method according to claim 1, **characterized in that** utilizing the enabled network support capability comprises: utilizing the enabled network support capability to transmit a dynamically changed AR terminal capability.

10. A method for accessing an Augmented Reality, AR, user context, **characterized by** comprising:
a Mobile AR server (204) collecting information related to AR user context accessing (S602), wherein the information related to the AR user context accessing comprises: different AR terminal capabilities, or AR terminal positioning capability, or enabled network support capability;
the Mobile AR server determining (S604), according to the collected information and a current AR service environment, a demand and/or a status of the AR user context accessing; and
the Mobile AR server notifying (S606), according to the determined demand and/or status of the AR user context accessing, a Mobile AR client to manage the AR user context accessing, wherein managing the AR user context accessing comprises accessing an appropriate AR terminal capability, or optimizing the accessing of an AR terminal capability, or utilizing an enabled network support capability.

11. The method according to claim 10, **characterized in that** information about AR terminal capabilities comprises: accessibility and/or current operating state.

12. The method according to claim 10, **characterized in that**
optimizing the accessing of the AR terminal capability comprises: changing AR terminal positioning accuracy and/or changing an AR terminal positioning mode; or,
pausing or restarting AR terminal positioning.

13. The method according to claim 10, **characterized in that** utilizing the enabled network support capability comprises: utilizing the enabled network support capability to transmit a dynamically changed AR terminal capability.

## Patentansprüche

1. Verfahren zum Zugriff auf Benutzerkontext in erweiterter Realität, AR-Benutzerkontext, **dadurch gekennzeichnet, dass** es umfasst:
Sammeln (S302), seitens eines mobilen AR-Clients (202), von dem AR-Benutzerkontext-Zugriff zugehörigen Informationen, wobei die dem AR-Benutzerkontext-Zugriff zugehörigen Informationen umfassen: verschiedene AR-Endgerätfähigkeiten oder eine AR-Endgerät-Ortungsfähigkeit oder eine Netzwerkunterstützungsfähigkeit;
Ermitteln (S304), seitens des mobilen AR-Clients, eines Bedarfs und/oder eines Status des AR-Benutzerkontext-Zugriffs in Abhängigkeit der gesammelten Informationen und einer aktuellen AR-Service-Umgebung; und
Ausführen (S306), seitens des mobilen AR-Clients, des AR-Benutzerkontext-Zugriffs in Abhängigkeit des ermittelten Bedarfs und/oder Status des AR-Benutzerkontext-Zugriffs,
wobei das Ausführen des AR-Benutzerkontext-Zugriffs das Zugreifen auf eine geeignete AR-Endgerätfähigkeit oder das Optimieren des Zugreifens auf eine AR-Endgerätfähigkeit oder das Verwenden einer Netzwerkunterstützungsfähigkeit umfasst.

2. Verfahren nach Anspruch 1, **dadurch gekennzeichnet, dass** die Informationen über die AR-Endgerätfähigkeiten umfassen: Zugänglichkeit und/oder aktuellen Betriebszustand.

3. Verfahren nach Anspruch 1, **dadurch gekennzeichnet, dass**
die Informationen über die AR-Endgerät-Ortungsfähigkeit mindestens eine von AR-Endgerät-Ortungsgenauigkeit und AR-Endgerät-Ortungsart umfassen, die AR-Endgerät-Ortungsart vorzugsweise mindestens eine von GPS-Ortung, Basisstation-Ortung und WLAN-basierte Ortung umfasst; oder
die Netzwerkunterstützungsfähigkeit umfasst: eine oder mehrere Open Mobile Alliance-(OMA) Fähigkeitskomponenten.

4. Verfahren nach Anspruch 1, **dadurch gekennzeichnet, dass**
das Ermitteln des Bedarfs des AR-Benutzerkontext-Zugriffs seitens des mobilen AR-Clients umfasst: Abrufen der aktuellen AR-Service-Umgebung durch den mobilen AR-Client; und Ermitteln, seitens des mobilen AR-Clients, des Bedarfs des AR-Benutzerkontext-Zugriffs in Abhängigkeit der abgerufenen aktuellen AR-Service-Umgebung; oder
das Ermitteln des Status des AR-Benutzerkontext-Zugriffs seitens des mobilen AR-Clients umfasst: Abrufen der aktuellen AR-Service-Umgebung durch den mobilen AR-Client; Ermitteln, seitens des mobilen AR-Clients, des Bedarfs des aktuellen AR-Benutzerkontext-Zugriffs in Abhängigkeit der abgerufenen aktuellen AR-Service-Umgebung; Ermitteln, seitens des mobilen AR-Clients, einer Fähigkeit des aktuellen AR-Benutzerkontext-Zugriffs in Abhängigkeit der gesammelten Informationen; und Ermitteln, seitens des mobilen AR-Clients, des Status des AR-Benutzerkontext-Zugriffs durch Vergleichen des ermittelten Bedarfs des aktuellen AR-Benutzerkontext-Zugriffs mit der ermittelten Fähigkeit des aktuellen AR-Benutzerkontext-Zugriffs.

5. Verfahren nach Anspruch 4, **dadurch gekennzeichnet, dass**
das Abrufen der aktuellen AR-Service-Umgebung seitens des mobilen AR-Clients umfasst: das Abrufen eines Abstands zwischen einem Einsatzort eines gefundenen AR-Ziels und eines Benutzerorts seitens des mobilen AR-Clients; oder das Abrufen des geringsten Abstands zwischen Einsatzorten anderer nicht abgerufener, durch Suchen rückgemeldeter AR-Ziele und dem Benutzerort seitens des mobilen AR-Clients; oder das Abrufen der Zahl nahe gelegener, zu identifizierender AR-Ziele, welche durch Suchen rückgemeldet werden, seitens des mobilen AR-Clients; oder
die Informationen über den Bedarf des AR-Benutzerkontext-Zugriffs umfassen: die Art einer AR-Endgerätfähigkeit, auf welche zuzugreifen ist; oder die Art einer Netzwerkunterstützungsfähigkeit, auf welche zuzugreifen ist; oder
die Informationen über den Status des AR-Benutzerkontext-Zugriffs umfassen: die Art einer AR-Endgerätfähigkeit, welche zu optimieren ist, bei einer oder mehreren Fähigkeiten des aktuellen AR-Benutzerkontext-Zugriffs entsprechend dem Bedarf des aktuellen AR-Benutzerkontext-Zugriffs; oder die Art einer Netzwerkunterstützungsfähigkeit, welche zu optimieren ist, bei einer oder mehreren Fähigkeiten des aktuellen AR-Benutzerkontext-Zugriffs entsprechend dem Bedarf des aktuellen AR-Benutzerkontextzugriffs.

6. Verfahren nach Anspruch 1, **dadurch gekennzeichnet, dass** die Informationen über die aktuelle AR-Service-Umgebung mindestens eine der folgenden umfassen:
den geringsten Abstand zwischen einem Einsatzort eines gefundenen AR-Ziels und einem Benutzerort;
den geringsten Abstand zwischen Einsatzorten anderer nicht abgerufener AR-Ziele und dem Benutzerort; und
die Anzahl von AR-Zielen, welche nahe dem mobilen AR-Client zu identifizieren sind.

7. Verfahren nach Anspruch 1, **dadurch gekennzeichnet, dass** die AR-Endgerätfähigkeit umfasst: die AR-Endgerät-Ortungsfähigkeit; oder die AR-Endgerätfähigkeit zum Zugriff auf einen AR-Benutzerkontext verwendet wird.

8. Verfahren nach Anspruch 1, **dadurch gekennzeichnet, dass** das Optimieren des Zugriffs der AR-Endgerätfähigkeit umfasst: Ändern der AR-Endgerät-Ortungsgenauigkeit und/oder Ändern einer AR-Endgerät-Ortungsart; oder Aussetzen oder Neustarten der AR-Endgerätortung.

9. Verfahren nach Anspruch 1, **dadurch gekennzeichnet, dass** das Verwenden der Netzwerkunterstützungsfähigkeit umfasst: Verwenden der Netzwerkunterstützungsfähigkeit zum Übertragen einer dynamisch geänderten AR-Endgerätfähigkeit.

10. Verfahren zum Zugriff auf Benutzerkontext in erweiterter Realität, AR-Benutzerkontext, **dadurch gekennzeichnet, dass** es umfasst:
Sammeln (S602), seitens eines mobilen AR-Servers (204), von dem AR-Benutzerkontext-Zugriff zugehörigen Informationen, wobei die dem AR-Benutzerkontext-Zugriff zugehörigen Informationen umfassen: verschiedene AR-Endgerätfähigkeiten oder eine AR-Endgerät-Ortungsfähigkeit oder eine Netzwerkunterstützungsfähigkeit;
Ermitteln (S604), seitens des mobilen AR-Servers, eines Bedarfs und/oder eines Status des AR-Benutzerkontext-Zugriffs in Abhängigkeit der gesammelten Informationen und einer aktuellen AR-Service-Umgebung; und
Benachrichtigen (S606), seitens des mobilen AR-Servers, eines mobilen AR-Clients zum Ausführen des AR-Benutzerkontext-Zugriffs in Abhängigkeit des ermittelten Bedarfs und/oder Status des AR-Benutzerkontext-Zugriffs, wobei das Ausführen des AR-Benutzerkontext-Zugriffs das Zugreifen auf eine geeignete AR-Endgerätfähigkeit oder das Optimieren des Zugreifens auf eine AR-Endgerätfähigkeit oder das Verwenden einer Netzwerkunterstützungsfähigkeit umfasst.

11. Verfahren nach Anspruch 10, **dadurch gekennzeichnet, dass** die Informationen über die AR-Endgerätfähigkeiten umfassen: Zugänglichkeit und/oder aktuellen Betriebszustand.

12. Verfahren nach Anspruch 10, **dadurch gekennzeichnet, dass**
das Optimieren des Zugriffs der AR-Endgerätfähigkeit umfasst: Ändern der AR-Endgerät-Ortungsgenauigkeit und/oder Ändern einer AR-Endgerät-Ortungsart; oder
Aussetzen oder Neustarten der AR-Endgerätortung.

13. Verfahren nach Anspruch 10, **dadurch gekennzeichnet, dass** das Verwenden der Netzwerkunterstützungsfähigkeit umfasst: Verwenden der Netzwerkunterstützungsfähigkeit zum Übertragen einer dynamisch geänderten AR-Endgerätfähigkeit.

## Revendications

1. Un procédé pour accéder à un contexte d'utilisateur de Réalité Augmentée, RA, **caractérisé par** le fait de comprendre :
un client de RA mobile (202) pour collecter des informations liées à l'accès au contexte d'utilisateur de RA (S302), sachant que l'information liée à l'accès au contexte d'utilisateur de RA comprend : différentes capacités de terminal de RA, ou une capacité de positionnement de terminal de RA, ou une aptitude au support réseau activé ;
le client de RA mobile déterminant (S304), conformément à l'information collectée et un environnement actuel de service de RA, une demande et/ou un état de l'accès au contexte d'utilisateur de RA ; et
le client de RA mobile gérant (S306) l'accès au contexte d'utilisateur de RA d'après la demande déterminée et/ou l'état d'accès au contexte d'utilisateur de RA,
sachant que le fait de gérer l'accès au contexte d'utilisateur de RA comprend le fait d'accéder à une capacité adéquate de terminal de RA ou d'optimiser l'accès à une capacité de terminal de RA, ou d'utiliser une aptitude au support réseau activé.

2. Le procédé d'après la revendication 1, **caractérisé en ce que** l'information concernant les capacités de terminal de RA comprend : l'accessibilité et/ou l'état de fonctionnement actuel.

3. Le procédé d'après la revendication 1, **caractérisé en ce que** l'information concernant la capacité de positionnement de terminal de RA comprend au moins un parmi : une précision de positionnement de terminal de RA, et un mode de positionnement de terminal de RA, préférablement, le mode de positionnement de terminal de RA comprenant au moins un parmi : un positionnement par système mondial de localisation, GPS, un positionnement par station de base et un positionnement par fidélité sans fil, WiFi ; ou que
l'aptitude au support réseau activé comprend : un ou plusieurs éléments de capacité *Open Mobile Alliance,* OMA.

4. Le procédé d'après la revendication 1, **caractérisé en ce que**
le fait que le client de RA mobile détermine la demande de l'accès au contexte d'utilisateur de RA comprend : le fait que le client de RA mobile obtienne l'environnement actuel de service de RA ; et le fait que le client de RA mobile détermine, conformément à l'environnement actuel de service de RA obtenu, la demande de l'accès au contexte d'utilisateur de RA ; ou que
le fait que le client de RA mobile détermine l'état de l'accès au contexte d'utilisateur de RA comprend : le fait que le client de RA mobile obtienne l'environnement actuel de service de RA ; le fait que le client de RA mobile détermine, conformément à l'environnement actuel de service de RA obtenu, la demande de l'accès au contexte d'utilisateur de RA actuel ; le fait que le client de RA mobile détermine, conformément à l'information collectée, une capacité d'accès au contexte d'utilisateur de RA actuel ; et le fait que le client de RA mobile détermine l'état d'accès au contexte d'utilisateur de RA en effectuant une comparaison de la demande de l'accès au contexte d'utilisateur de RA actuel déterminée avec la capacité déterminée d'accès au contexte d'utilisateur de RA actuel.

5. Le procédé d'après la revendication 4, **caractérisé en ce que**
le fait que le client de RA mobile obtienne l'environnement actuel de service de RA comprend : le fait que le client de RA mobile obtienne une distance entre l'emplacement du déploiement d'une cible RA trouvée et un emplacement d'utilisateur ; ou le fait que le client de RA mobile obtienne la distance minimale entre les emplacements de déploiement d'autres cibles RA non-obtenues renvoyées par la recherche et l'emplacement d'utilisateur ; ou le fait que le client de RA mobile obtienne le nombre de cibles RA voisines à identifier qui sont renvoyées par la recherche ; ou que
de l'information concernant la demande de l'accès au contexte d'utilisateur de RA comprend : le type de capacité de terminal de RA auquel il est nécessaire d'accéder; ou
le type d'aptitude au support réseau activé, auquel il est nécessaire d'accéder, ou
de l'information concernant l'état d'accès au contexte d'utilisateur de RA comprend : le type de capacité de terminal de RA, qui doit être optimisé, parmi une ou plusieurs capacités de l'accès au contexte d'utilisateur de RA actuel correspondant à la demande de l'accès au contexte d'utilisateur de RA actuel ; ou le type d'une aptitude au support réseau activé, qui doit être optimisé, parmi une ou plusieurs capacités de l'accès au contexte d'utilisateur de RA actuel correspondant à la demande de l'accès au contexte d'utilisateur de RA actuel.

6. Le procédé d'après la revendication 1, **caractérisé en ce que** de l'information concernant l'environnement actuel de service de RA comprend au moins un des suivants :
la distance minimale entre l'emplacement du déploiement d'une cible RA trouvée et un emplacement d'utilisateur ;
la distance minimale entre des emplacements de déploiement d'autres cibles RA non-obtenues et l'emplacement d'utilisateur ; et
le nombre de cibles RA à identifier à proximité du client de RA mobile.

7. Le procédé d'après la revendication 1, **caractérisé en ce que** la capacité de terminal de RA comprend : une capacité de positionnement de terminal de RA ; ou que la capacité de terminal de RA est employée pour accéder à un contexte d'utilisateur de RA.

8. Le procédé d'après la revendication 1, **caractérisé en ce que** le fait d'optimiser l'accès aux capacités de terminal de RA comprend le fait de : changer la précision de positionnement de terminal de RA et/ou de changer un mode de positionnement de terminal de RA ; ou suspendre ou redémarrer le positionnement de terminal RA.

9. Le procédé d'après la revendication 1, **caractérisé en ce que** le fait d'utiliser l'aptitude au support réseau activé comprend le fait de : utiliser l'aptitude au support réseau activé pour transmettre une capacité de terminal de RA dynamiquement modifiée.

10. Un procédé pour accéder à un contexte d'utilisateur de Réalité Augmentée, RA, **caractérisé par** le fait de comprendre :
un serveur de RA mobile (200) pour collecter des informations liées à l'accès au contexte d'utilisateur de RA (S602),
sachant que l'information liée à l'accès au contexte d'utilisateur de RA comprend : différentes capacités de terminal de RA, ou une capacité de positionnement de terminal de RA, ou une aptitude au support réseau activé ;
le serveur de RA mobile déterminant (S604), conformément à l'information collectée et un environnement actuel de service de RA, une demande et/ou un état de l'accès au contexte d'utilisateur de RA ; et
le serveur de RA mobile avisant (S606), conformément à la demande déterminée et/ou un état de l'accès au contexte d'utilisateur de RA déterminé, un client de RA mobile, afin qu'il gère l'accès au contexte d'utilisateur de RA, sachant que le fait de gérer l'accès au contexte d'utilisateur de RA comprend le fait d'accéder à une capacité adéquate de terminal de RA ou d'optimiser l'accès à une capacité de terminal de RA, ou d'utiliser une aptitude au support réseau activé.

11. Le procédé d'après la revendication 10, **caractérisé en ce que** l'information concernant les capacités de terminal de RA comprend : l'accessibilité et/ou l'état de fonctionnement actuel.

12. Le procédé d'après la revendication 10, **caractérisé en ce que** le fait de
optimiser l'accès aux capacités de terminal de RA comprend le fait de : changer la précision de positionnement de terminal de RA et/ou de changer un mode de positionnement de terminal de RA ; ou
suspendre ou redémarrer le positionnement de terminal RA.

13. Le procédé d'après la revendication 10, **caractérisé en ce que** le fait d'utiliser l'aptitude au support réseau activé comprend le fait de : utiliser l'aptitude au support réseau activé pour transmettre une capacité de terminal de RA dynamiquement modifiée.
